# EUROPÄISCHE PATENTANMELDUNG

(11) **EP 4 826 811 A1**
(43) Veröffentlichungstag der Anmeldung: **21.10.2026**
(21) Anmeldenummer: 26165508.8
(22) Anmeldetag: 17.03.2026
(51) Int. Cl.: H01M 8/18, H01M 8/04082

(54) **VERWENDUNG VON BESTEHENDEN LAGERSILOS DER LANDWIRTSCHAFT ODER VON BIOGASANLAGEN FÜR DIE STROMSPEICHERUNG**

(30) Priorität: 21.03.2025 DE 102025111008
(71) Anmelder: Brakelsberg-Eicker, Joachim, 58256 Ennepetal (DE)
(72) Erfinder: Brakelsberg-Eicker, Joachim, 58256 Ennepetal (DE)
(74) Vertreter: Eisenführ Speiser

(57) **Zusammenfassung**

Die vorliegende Erfindung betrifft ein Verfahren zum Bereitstellen einer Durchflussbatterie, wobei die Durchflussbatterie ein erstes Volumen (V1) und ein zweites Volumen (V2) für die Aufnahme von unterschiedlichen Elektrolytflüssigkeiten aufweist und das erste Volumen oder zweite Volumen durch den ersten und/oder zweiten Lagerbehälter bereitgestellt wird, wobei die Nutzung des Volumens der Durchflussbatterie nach Nutzung des Lagerbehälters in einem landwirtschaftlichen Betrieb oder einer Biogasanlage und dergleichen erfolgt.

## Beschreibung

Im Zuge des Ausbaus der erneuerbaren Energiequellen kommt es mehr und mehr vor, dass zwar ausreichend elektrische Leistung (und auch elektrische Energie) zu einem bestimmten Zeitpunkt erzeugt wird, diese elektrische Leistung/Energie aber aus Kapazitätsengpässen in der Netzinfrastruktur oder aus sonstigen Gründen zeitweise nicht dem Verbraucher zugeführt werden kann. In solchen Fällen erfolgt dann regelmäßig eine Abschaltung oder Drosselung der erneuerbaren Energiequellen. Des Weiteren ist zu erwarten, dass mit fortschreitendem Ausbau der erneuerbaren Energien die Stromerzeugung den Bedarf temporär im Tages-, Wochen- oder Monatsverlauf übertreffen wird.

Das bekannteste Beispiel sind dabei die Windenergieanlagen und Windparks, insbesondere im Norden Deutschlands, die bei guten Windverhältnissen sehr große Mengen an elektrischer Leistung/Energie erzeugen, welche aber oftmals bei verschiedenen Situationen nicht Verbrauchern in Süddeutschland zugeführt werden kann, und da der Energieverbrauch im Norden Deutschlands regelmäßig - bezogen auf die Fläche - geringer ist als im Süden Deutschlands, werden dann diese Windenergieanlagen/Windparks bei auftretenden Netzengpässen, wenn also die großen elektrischen Netzleitungen auf die Hoch- und Höchstspannungsebene schon ausgelastet sind, abgeschaltet oder gedrosselt.

Zur Vermeidung dieser Drosselung oder Abschaltung der erneuerbaren Energiequellen wird auch daran gearbeitet, eine Speicherinfrastruktur aufzubauen, sodass die zunächst einmal nicht benötigte elektrische Energie der erneuerbaren Energiequellen zwischengespeichert werden kann und dann, wenn es wieder möglich ist, den Netzen und damit auch den an den Netzen hängenden Verbrauchern zuzuführen.

Da bekanntlich bei vielen erneuerbaren Energiequellen auch eine Fluktuation in der Erzeugung gegeben ist, die nur selten an die Verbrauchsbedarfe angepasst ist, müssen mit dem weiteren Ausbau der erneuerbaren Energien immer mehr Eingriffe in das Netz und vornehmlich in die Energiequellen einerseits oder große Verbraucher andererseits vorgenommen werden. Verbrauchsspitzen müssen abgefedert werden, wie erwähnt müssen bei einer Überproduktion die Anlagen, z. B. Windenergieanlagen, PV-Anlagen, Biogasanlagen, Wasserkraftanlagen, abgestellt oder gedrosselt werden, selbst wenn in der Zukunft zu erwarten ist, dass dies seltener der Fall sein könnte, wenn der Netzausbau gelingt.

Die Speicherung von elektrischer Energie wird auch einen wichtigen Beitrag zur Netzstabilität und Netzintegrität leisten. Solche Speicherung von elektrischer Energie wird auch schon lange umgesetzt, insbesondere mittels Pumpspeicherkraftwerken, Druckspeicherkraftwerken, aber auch anderer Speicherkraftwerke wie auch in Batteriespeichern verschiedenster Bauart.

Diese Batterien/Batteriespeicher (Akkumulatoren) sind dann eine separate Infrastruktur, z. B. Lithium-Ionen-Speicher, die in Containern oder separaten, neuen Gebäuden untergebracht werden und oftmals werden auch viele Container/Gebäude für solche Batteriespeicher errichtet, um möglichst viel elektrische Energie speichern zu können. Die separaten Infrastrukturmaßnahmen bedürfen einer separaten Baugenehmigung, -planung, Errichtung etc.

Große Windparkvorhaben sind heute oftmals nur noch anschlussfähig, wenn ihnen zur Seite ein entsprechender Stromspeicher als Einrichtung zur Verfügung gestellt wird was insgesamt den gesamten Ausbau für konkrete Vorhaben erheblich verteuert als auch die Projekte komplizierter macht.

Abgesehen von wenigen Einzelanlagen mit einer Sondergenehmigung sind praktisch alle (> 98 %) Windenergieanlagen im ländlichen Raum angesiedelt. Dies hängt mit vielerlei genehmigungsrechtlichen Kriterien zusammen, wie z. B. dem Mindestabstand (> 600 m) der Windenergieanlagen zur nächsten Wohnbebauung, aber auch mit den vorhandenen Freiflächen (Äcker, Wiesen, Wälder) im ländlichen Raum, eine große Windenergieanlage in einer urbanen Struktur würde die Errichtung erheblich erschweren und verteuern, denn in städtischen Bereichen sind schon viele (und sehr teure) Flächen verbaut oder versiegelt und für einen Aufbau einer großen Windenergieanlage würde man auch dort nicht ohne Weiteres Freiflächen in der Größenordnung von 0,7 bis 1 ha finden, von den logistischen Herausforderungen der Errichtung einmal abgesehen.

Darüber hinaus sind Windenergieanlagen im ländlichen Bereich oftmals auch effektiver, weil die Bodenstruktur mit Gebäuden nicht so zersiedelt ist wie im städtischen Bereich, was insgesamt auch zu weniger Turbulenzen des Windes in 120 - 160 m Höhe führt als im städtischen Bereich.

So wie es bei Windenergieanagen der Fall ist, ist es vergleichsweise ähnlich, wenn auch teilweise anders bei der Solarenergieerzeugung, der photovoltaischen Erzeugung von elektrischer Energie mittels Solarzellen. Es gibt zwar in großem Maße "Dach-PV-Anlagen" in den bebauten Gebieten, große Solarparks wiederum sind selten in Städten, sondern oftmals wiederum nur in ländlichen Gebieten anzutreffen, weil eben auch nur dort die entsprechenden Freiflächen zur Verfügung stehen.

Im ländlichen Raum hingegen sind auch fast alle landwirtschaftlichen Betriebe (Höfe) wie auch Biogasanlagen zu finden, also die Anlagen, bei denen aus einem pflanzlichen oder anderen Stoff (z. B. Gülle, Mist, Gärreste etc.) ein Biogas gewonnen wird, welches entweder in ein Gasnetz, noch häufiger der Verstromung zugeführt wird, sodass die Biogasanlage als Stromerzeuger mit einer entsprechend planbaren Dauereinspeisung zur Verfügung steht. Auch solche Biogasanlagen brauchen oftmals sehr viel Fläche (> 1 ha), insbesondere dann, wenn sie mit Mais beschickt werden (alleine die Mais-Silage-Flächen brauchen sehr große Areale) und wenn darüber hinaus noch Gülle, Klärschlamm oder andere landwirtschaftliche Güter in der Biogasanlage genutzt werden, weitere Infrastrukturen.

Aufgabe der Erfindung ist es, eine Möglichkeit zur Speicherung elektrischer Energie im landwirtschaftlichen Bereich vorzusehen und dabei bevorzugt, vor allem überwiegend bestehende landwirtschaftliche Infrastrukturen zu nutzen.

Die Aufgabe wird gelöst mit der Erfindung nach Anspruch 1 oder 2, vorteilhafte Weiterbildungen sind in den Unteransprüchen beschrieben.

Der Erfindung liegt die Erkenntnis zugrunde, dass - aus welchen Gründen auch immer - viele landwirtschaftliche Betriebe entweder ganz aufgegeben werden oder aufgrund bestehender Änderung in den Rahmenbedingungen, wenn nicht die Aufgabe, so doch ein Wechsel zu einer neuen Betriebsart (z. B. Schweinemastbetrieb zum Biolandbau) eingeleitet werden muss. Seit vielen Jahren nimmt daher die Zahl der landwirtschaftlichen Betriebe ab, was immer auch zur Folge hat, dass die entsprechenden Hofgebäude mit ihrer bestehenden landwirtschaftlichen Infrastruktur nicht mehr genutzt werden (können). Der Abriss der nicht mehr benötigten Infrastruktur wird dann oftmals aufgrund der hohen Kosten dafür nicht durchgeführt.

Auch viele Biogasanlagen werden aufgrund des Erreichens ihrer maximalen Betriebszeit -bzw. ist nach Auslauf der EEG-Förderung, oftmals kein wirtschaftlicher Betrieb mehr möglich- (z. B. 20 Jahre) oder aus anderen Gründen stillgelegt.

Alleine im Zeitraum 2025/2026 sollen in Deutschland über 500 Biogasanlagen deshalb stillgelegt werden; die Zahl der landwirtschaftlichen Betriebe, die aufgegeben werden oder bei denen bestehende landwirtschaftliche Infrastruktur (Ställe, Gebäude, Lager, Scheunen etc.) nicht mehr genutzt werden kann, liegt deutlich darüber.

Bauliche Infrastrukturen, die nach der Stilllegung oder Umstrukturierung eines Hofes leer stehen bzw. ungenutzt sind, sind oftmals nicht nur Stallanlagen, z. B. für die Schweinemast, sondern auch die Silo-, Gülle-, Gär- oder Mistbehälter, die ein solcher landwirtschaftlicher Betrieb bei der Tiermast (Tierhaltung / Biogaserzeugung) vorhalten muss, um die entsprechenden Exkremente aus der Tierhaltung zu speichern, denn nicht immer ist es möglich, die Gülle / Gärreste bzw. den Mist der Tiermast als wertvollen Dünger auf die Felder zu bringen. Vielmehr gibt es vergleichsweise nur geringe Zeitfenster von wenigen Wochen im Frühjahr und im Herbst, um Gülle und Mist als Dünger den landwirtschaftlichen Ackerbauflächen zur Verfügung zu stellen.

Solche Lagerbehälter für Gülle, die für die Tierhaltung, insbesondere Milchviehhaltung, Bullenmast, Schweinehaltung, aber auch in großen Putenanlagen, benötigt werden, sind Güllelagersilos oder Güllelagerbehälter oder dergleichen, die standardisiert errichtet werden und deren Lagerkapazität oftmals zwischen 500 m³ und 5000 m³ liegt, bei Großanlagen auch darüber hinaus, und bei sehr großen landwirtschaftlichen Betrieben gibt es gleich mehrere solcher Lagerbehälter für die flüssigen Exkremente (Gülle oder dergleichen).

Gleiches gibt es auch für die Biogasanlagen, bei denen letztlich die gleiche Lagerbehälter-Infrastruktur, wie sie von Güllelagerbehältern bekannt ist, für die Fermenter eingesetzt wird, also den Teil der Biogasanlage, in dem die Fermentation stattfindet, und in Biogasanlagen können solche Fermenter auch leicht ein Volumen von 1000 m³ oder gar 5000 m³ aufweisen. Bei großen Biogasanlagen wiederum gibt es dann entsprechend mehrere Fermenter einschließlich noch weiterer Nachgärer/Fermenter und Gärresteläger.

Solche Silobehälter, oder auch Lagersilos genannt, für Gülle, Mist, oder Nass- oder Trockenfermentation von Biogasanlagen, auch Vorgruben, Klärgruben oder auch Güllekanäle, die zur Lagerung in Stallgebäuden, die unterhalb der Laufflächen angelegt werden, nachfolgend als Lagerbehälter bezeichnet, also als Behälter für die Aufnahme von großen Mengen von Flüssigkeiten, evtl. auch vermengt mit Feststoff-Bestandteilen.

Solche bestehenden Lagerbehälter, sei es für Gülle, Gärreste oder in ihrer Funktion als Fermenter, sind regelmäßig Stahlbeton- oder Edelstahl-Bauwerke, meistens in standardisierter Form, und diese Lagerbehälter sind dazu eingerichtet, nicht nur große Lagerkapazitäten aufzunehmen, sondern auch mit größtmöglicher Sicherheit dafür zu sorgen, dass keine Flüssigkeit aus den Lagerbehältern in das Erdreich gelangt. Aufgrund ihrer Größe sind diese Lagerbehälter auch stabil genug gebaut, um bis zu einem bestimmten Füllstand Flüssigkeiten wie z. B. Gülle, Mist, Fermentermaterialien etc. aufzunehmen. Das bedeutet auch, dass solche Lagerbehälter in der Lage sind, sehr große Kräfte auszuhalten, um die Flüssigkeit sicher aufzunehmen.

Die Erfindung schlägt vor, bestehende und/oder bereits genutzte Infrastruktur, insbesondere die Lagerbehälter, aus dem Bereich der Landwirtschaft bzw. Biogasanlagen zu nutzen, um diese als dezentralen Stromspeicher einzurichten und zu nutzen. Der Vorteil dieses erfindungsgemäßen Vorschlags besteht vor allem darin, dass keine neue Infrastruktur teuer eingerichtet werden muss, auch kein Bauantrag oder dergleichen dafür gestellt werden muss, denn das Bauwerk, also die bestehende Infrastruktur, gibt es bereits und hat sich bewährt, wenn auch bis dato für einen anderen Zweck (evtl. muss ein Antrag auf Umnutzung gestellt werden), z. B. als Gülle-, Gärrestelagersilo oder als Fermenter oder dergleichen. Fermenter gemäß der vorliegenden Erfindung können sowohl liegende Fermenter als auch stehende Fermenter sein sowie auch Nachfermenter.

Ein weiterer Vorteil der Erfindung besteht darin, dass keine zusätzlichen Flächen versiegelt werden müssen (Stichwort *Flächenfraß*)*.* In Deutschland werden derzeit täglich rund 51-55 Hektar neu versiegelt. Der politische Wille zielt klar auf eine deutliche Reduzierung dieses Verbrauchs; langfristig wird bis 2050 häufig über eine Netto-Null-Versiegelung diskutiert. Gerade im Außenbereich wird eine weitere Bebauung und Versiegelung zunehmend kritisch gesehen.

Die Erfindung kommt ohne zusätzlich Bebauung oder Versiegelung aus. Sowohl Behälter als auch Logistikflächen und Zuwegungen sind bereits vorhanden und können in ihrer bestehenden Form genutzt werden. Dadurch wird ein Beitrag zur Ressourcenschonung und Nachhaltigkeit geleistet. Auch die Anbindungen an das öffentliche Verkehrsnetz (LKW-/Trecker-befahrbar) bestehen bereits und können weiterhin sinnvoll genutzt werden. Das Landschaftsbild wird somit nicht durch die Errichtung weiterer Einrichtungen beeinträchtigt.

Ein weiterer Vorteil der Erfindung ist der, dass somit ein Stromspeicher im ländlichen Raum geschaffen wird, also dort, wo ohnehin schon der größte Teil der elektrischen Energie aus erneuerbaren Energiequellen erzeugt wird. Durch die Erfindung wird nicht nur insgesamt der Flächenverbrauch für zusätzliche Bauwerke geschont, was nicht nur dem Landschaftsbild, dem Landschafts- und Naturschutz, sondern auch der Ressourcenschonung dient, sondern auch die Entfernung zwischen erneuerbaren Energiequellen einerseits und deren erfindungsgemäßen Speichern ist systemisch kurz, was auch hilft, mit relativ geringen Verlustleistungen die erneuerbare Energiequelle mit dem/den Lagerbehältern zu verbinden und somit größere Leitungsverluste zu verringern.

Wenn der Lagerbehälter bis dato die Funktion eines Fermenters / Gärrestelagers einer Biogasanlage hat, gibt es im Übrigen schon auch einen Netzeinspeisepunkt, denn schließlich hat die Biogasanlage bis dato Strom erzeugt, z. B. in der Größenordnung von 500 kW bis (über) 2 MW, und auch dieser Stromanschluss als Infrastruktureinrichtung kann weiterhin genutzt werden, nunmehr nur für die elektrische Energie, die in den Speichern gespeichert ist.

Je nach Einbindung des Speichers in das Stromnetz kann der Stromanschluss entweder ausschließlich zum Ausspeichern genutzt werden (das Einspeichern erfolgt dabei direkt aus einer räumlich zugeordneten Energiequelle wie einem Wind- oder Solarpark) oder er dient sowohl dem Ein- als auch dem Ausspeichern.

Der unter Umständen nötige Einbau/Nachrüstung eines Umrichters (Gleichspannung → Wechselspannung) bzw. Trafos ist ein vergleichsweise sehr geringer Eingriff mit Standardbauteilen in die bestehende Infrastruktur am Ort der Lagerbehälter.

Somit können bestehende landwirtschaftlich genutzte Infrastruktur-Einrichtungen, die ihren originären Zweck nicht mehr erfüllen, weiter genutzt werden.

Erfindungsgemäß wird vorgeschlagen, vorbeschriebene landwirtschaftliche Infrastruktur zu nutzen, indem ein Behältnis wie ein bestehender Güllelagerbehälter oder Fermenter als Tank für flüssige Elektrolyte beispielsweise für eine Redox-Flow-Batterie bzw. Durchflussbatterie dient.

Eine typische Durchflussbatterie weist zwei Flüssigkeitstanks auf, wobei jeweils Pumpen dafür sorgen, dass die Flüssigkeit der beiden Tanks auf verschiedenen Seiten einer Membraneinrichtung vorbeiströmt und wobei sich dann mittels Ionenaustausch, begleitet von einem elektrischen Stromfluss, an der Membran beide Flüssigkeiten in ihrem jeweiligen Kreislauf zirkulieren, es wird also Flüssigkeit vom ersten Tank aus diesem herausgepumpt, an der Membran vorbeigeführt und dann wieder in den ersten Tank zurückgeleitet und Gleiches geschieht dann auch für den zweiten Tank, es wird also Flüssigkeit aus dem zweiten Tank herausgepumpt, an der Membran vorbeigeleitet und dann wieder in den zweiten Tank zurückgepumpt.

Redox-Flow-Batterien, Vanadium-Redox-Akkumulator, Polysulfid-Bromid-Akkumulator, Zink-Brom-Akkumulator, Organic-SolidFlow-Batterien und viele andere Arten von Batterien, die auf flüssige Elektrolyte basieren und genutzt werden, werden auch als Durchflussbatterien, Salzwasserbatterien bezeichnet.

Bei der Redox-Flow-Batterie (Flüssigbatterie oder auch Nasszelle) dienen also zwei flüssige Elektrolyte zur Energiespeicherung. Beide Elektrolyte zirkulieren in zwei getrennten Kreisläufen. Der Ionentausch erfolgt in einer separaten Zelle (Energiewandler) mittels einer Membran. Mittels einer Oxidation bzw. Reduktion der im Elektrolyt gelösten chemischen Stoffe wird der Akkumulator so geladen bzw. entladen.

Die Energiedichte solcher Durchflussbatterien liegt bei 25 - 50 Wh/l. Dies ist vergleichsweise wenig im Vergleich zu einem Lithium-Ionen-Akkumulator/Batterie, dessen Energiedichte deutlich über 100 Wh/l beträgt. Der Wirkungsgrad solcher Durchflussbatterien liegt bei ca. 90 % und die Lebensdauer solcher Durchflussbatterien ist bei entsprechender Wartung quasi unbegrenzt.

Das gilt auch für die Skalierbarkeit und besonders bestechen Durchflussbatterien durch ihre Sicherheit, denn es kommen dabei praktisch keine Brennbaren oder explosiven Stoffe zum Einsatz und darüber hinaus kann sich die Kapazität und die Leistung flexibel an die Anforderungen und Gegebenheiten anpassen.

Der vermeintliche Nachteil der Durchflussbatterien - geringe Energiedichte - im Vergleich zum Lithium-Ionen-Akkumulator oder anderen energetischen Akkumulatoren/Batterien ist aber dann nicht vorhanden, wenn mit Behältern für Gülle oder Fermenter sehr große Volumina zur Verfügung stehen, die keiner Errichtung mehr bedürfen.

Der Nachteil der geringeren Energiedichte der Durchflussbatterien stellt sich ohnehin nur im mobilen Anwendungszweck ein, vorstehend geht es aber um die Einrichtung eines statischen Stromspeichers mit einem vorhandenen sehr bedeutenden Flüssigkeitsvolumen, z. B. 500 - 5.000 m³ oder mehr.

Aufgrund des beschriebenen Funktionsprinzips einer Durchflussbatterie eignen sich Gülle-/Gärresteläger oder Fermentereinrichtungen auf landwirtschaftlichen Betrieben oder Biogasanlagen ideal für eine Umnutzung als Batteriespeicher.

Wie erwähnt, sind die Gülle- bzw. Gärrestelagerbehälter dafür konzipiert, sehr große Mengen an Flüssigkeit aufzunehmen. Durch die Trennung von Flüssigkeits-Lagerbehälter und Energiewandler kann die Anlage individuell auf die jeweilige Situation angepasst werden.

Landwirtschaftliche Betriebe, insbesondere auch Biogasanlagen, verfügen bereits über einen leistungsstarken Stromnetzanschluss.

Sollte vor Ort nur ein einziger Silobehälter (oder eine ungerade Anzahl) zur Verfügung stehen, lässt sich dieser unter Einziehung einer dichten Trennwand in zwei verschiedene Tankvolumina aufteilen. Diese Trennwand kann auf verschiedene Weisen erstellt werden, z.B. aus Stahlbeton, der entsprechend mit der bestehenden Bauhülle verankert wird. Alternativ ist eine Stahl-, Kunststoff, oder Holzkonstruktion, die entsprechend beplankt und abgedichtet wird (z.B. Edelstahlbleche, entsprechend beschichtete Stahlplatten oder Kunststoffplatten / Kunststofffolien / Kunststoffplanen, oder eine zielführende Kombination aus den verschiedenen Baustoffen) umsetzbar. Im Bedarfsfall wird die Trennwand des Silobehälters mit einer isolierenden Schicht versehen, z. B. einer Kunststofffolie. Auch ist der Silobehälter oberseitig auf bekannte Weise abgeschlossen, z. B. mit einem Foliendach oder einer anderen Deckelkonstruktion, wie sie bereits von Fermentern und Güllelagerbehältern in der Landwirtschaft bekannt ist.

Stehen - was nicht selten der Fall ist - gleich mehrere Silobehälter vor Ort zur Verfügung, können auch einzelne Tanks als Ganzes für die Aufnahme der Akkumulator-Flüssigkeiten genutzt werden.

Der Teil, in dem die Membran angeordnet ist, an deren verschiedenen Seiten die Flüssigkeiten vorbeiströmen, kann regelmäßig in einem Container (oder bereits bestehendem Gebäude) untergebracht werden und die Zu- und Abführung der jeweiligen Flüssigkeiten mittels Pumpen und Leitungen ist dabei keine besondere Herausforderung.

Die Stromspeicherkapazität, die mittels der Erfindung zur Verfügung gestellt werden kann, ist enorm.

Wenn man von einer Speicherkapazität von z. B. 0,025 kWh/I ausgeht, führt dies dann zu einer Speicherkapazität von 25 kWh/m³, was bei einem Behältervolumen von 1.000 m³ bereits zu einer Speicherkapazität von 25.000 kWh, also 25 MWh führt.

Die Erfindung ist nachfolgend anhand eines Beispiels in einer Figur näher erläutert.

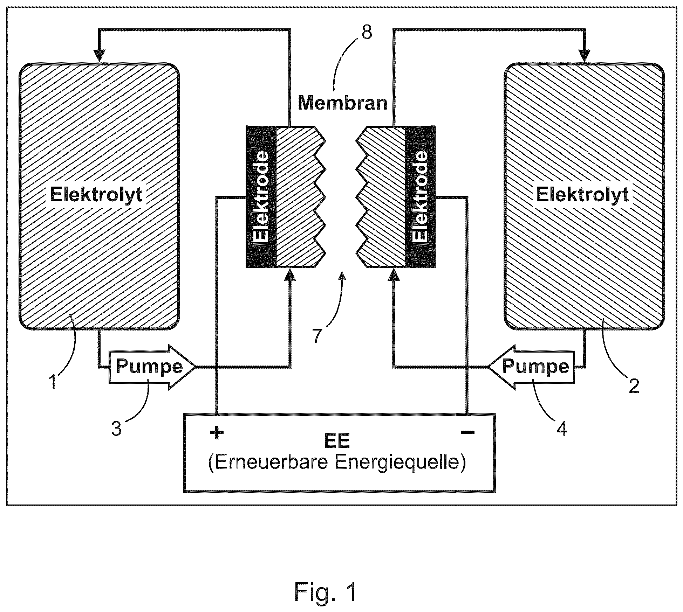

Figur 1 zeigt eine grundsätzliche Funktionsskizze mit einem ersten Lagerbehälter/Güllelager/Gärrestlager/Fermentersilo 1 und einem zweiten Lagerbehälter/Güllelager/Gärrestlager/Fermentersilo 2 und diese sind jeweils Teil von geschlossenen Pumpkreisläufen 3, 4 für Elektrolytflüssigkeiten. So kann der erste Lagerbehälter 1 eine Flüssigkeit mit Elektrolyt A aufnehmen, der zweite Lagerbehälter 2 eine Flüssigkeit mit Elektrolyt B, welche jeweils in einem geschlossenen Kreislauf mittels Pumpen 5, 6 zu dem Energiewandler 7 gepumpt werden, dort an verschiedenen Seiten einer Membran 8 vorbeiströmen und somit für die gewünschte Energiewandlung sorgen.

Der Energiewandler kann dabei auch in einem bestehenden Stallgebäude, Maschinenhaus, Container einer Biogasanlage untergebracht werden, bedarf also keiner zusätzlichen infrastrukturellen baulichen Neueinrichtung.

Wenn nur ein Lagerbehälter/Güllelager/Gärrestlager/Fermentersilo am Ort zur Verfügung steht, kann dieser Lagerbehälter mittig durch eine Trennwand unterteilt werden, um somit dann die beiden getrennten Volumina für die Elektrolytflüssigkeiten A und B zu schaffen.

Neben einer Trennwand, die den Behälter in zwei "Tortenstücke" unterteilt, kommt alternativ auch die Errichtung eines innenliegenden, zweiten, kleineren zylindrischen Behälters in Betracht. In diesem inneren zylindrischen Behälter würde Elektrolyt A gelagert. Im Zwischenraum zwischen dem inneren zylindrischen Behälter und der Außenwand des Gülle- bzw. Gärrestelagers würde Elektrolyt B gespeichert.

Der Vorteil dieser Konstruktion besteht darin, dass sich die entstehenden statischen Kräfte innerhalb und außerhalb des inneren zylindrischen Lagertanks weitgehend gegenseitig aufheben. Zudem ist der innere zylindrische Lagertank vergleichsweise einfach herzustellen.

Aufbau und Funktionsweise einer Durchflussbatterie, z. B. vom Typ einer Redox-Flow-Batterie, sind bekannt. Bei einer solchen Batterie werden flüssige Elektrolyte eingesetzt, die in zwei voneinander vollkommen unabhängigen Kreisläufen fließen. Die beiden Reaktionspartner liegen bei einer Redox-Flow-Batterie in flüssiger Form vor und zirkulieren in ihren Kreisläufen, und eine zwischengeschaltete Membran erlaubt dann einen Austausch von Ionen. Um ungewollte chemische Reaktionen ausschließen zu können, wird als Boden oft ein Graphit-Filz genutzt. Da die Elektrolyte außerhalb der galvanischen Zelle in getrennten Tanks gelagert werden, spricht man bei der Redox-Flow-Batterie von einem elektrochemischen Energiespeicher. Energiemenge und -leistung können in dem System einer Redox-Flow-Batterie unabhängig voneinander geändert werden und die eigentlichen Tanks lassen sich manuell befüllen und die Batterien können theoretisch auch so aufgeladen werden.

Die galvanische Zelle des Energiewandlers wird dabei durch eine spezielle Membran geteilt. Die Elektrolyten der beiden Halbzellen fließen an der Membran vorbei und liefern dort die eigentliche chemische Reaktion, indem eine Reduktion oder Oxidation stattfindet. Die Elektroden des Systems bestehen in der Regel aus Graphit, um ein hohes elektrochemisches Spannungsfenster aufrechterhalten zu können und als flüssiger Elektrolyt wird ein ionisches Lösungsmittel verwendet. Zusammen mit der Zellspannung bestimmt dann die Elektrolyt-Konzentration die Energiedichte der Redox-Flow-Batterie; Titan, Chrom, Vanadium und Schwefel haben sich in der Praxis als Elektrolyt-Lösungen bewährt, es gibt aber auch andere alternative Elektrolyt-Lösungen auf organischer Basis.

Die Vorteile von Durchflussbatterien, z. B. vom Typ einer Redox-Flow-Batterie (Redox-Flow-Akkumulatoren) können durch die Erfindung in einem bedeutenden Maß erreicht werden und der Nachteil von Durchflussbatterien, z. B. ihr sehr hohes Gewicht, ist bei der Erfindung irrelevant, weil der Lagerbehälter, der den Tank für die Aufnahme der ElektrolytFlüssigkeiten bildet, bereits existiert und bereits auf sehr hohe Gewichte ausgelegt ist.

Zum funktionalen Aufbau einer Redox-Flow-Batterie, eines Natrium-Ionen-Akkumulators, einer Durchflussbatterie der verschiedenen Arten, wird auf den Stand der Technik hingewiesen.

Grundsätzlich sind alle diese Durchflussbatterien der bekannten Art dazu geeignet, erfindungsgemäß verwendet zu werden, nämlich durch die Einbindung in bestehende landwirtschaftliche Infrastruktur wie Güllesilobehälter, Gärrestbehälter, Fermenterbehälter, Güllegruben, Klärbehältern oder dergleichen, als Tanks der Elektrolytflüssigkeiten der jeweiligen Speichertechnologie.

Der Vorteil der Erfindung besteht auch darin, dass durch die Nutzung bestehender Infrastruktur ein erheblich schnellerer Ausbau der Einrichtung der Speicherinfrastruktur möglich ist, weil nicht mehr die bauliche Planung, insbesondere die Beantragung und Genehmigung von Infrastruktureinheiten im ländlichen Raum notwendig ist, sondern weil die Infrastruktur schon besteht, zur Umnutzung nur um- oder nachgerüstet werden muss, wobei der Umrüstungsaufwand sich in Grenzen hält.

Natürlich muss der entsprechende Güllesilo, Gärrest- oder Fermenterbehälter sauber sein und es müssen einige Leitungen und Pumpen, auch Energiewandler, eingerichtet werden. Dies alles ist aber ohne besonderen Aufwand möglich und wäre auch dann nötig, wenn eine Durchflussbatterie mit völlig neuen Gebäuden und Tanklägern eingerichtet werden soll.

Wenn eine Windenergieanlage, eine photovoltaische Einrichtung, z. B. eine PV-Anlage, ein PV-Park in unmittelbarer Nähe einer bestehenden landwirtschaftlichen oder Biogas-Infrastruktur steht, kann auch die Windenergieanlage bzw. die PV-Anlage eine/ihre elektrische Leistung direkt dem erfindungsgemäßen Speicher zuführen, wobei dann eine Umwandlung von Gleichstrom in Wechselstrom nicht notwendig ist, sondern lediglich die Gleichspannung der Windenergieanlage, des Windparks oder der PV-Anlage mittels eines Hochsetzstellers auf das gewünschte Spannungsniveau der Durchflussbatterie gehoben oder mittels eines Tiefstellers abgesenkt wird.

Da eine Durchflussbatterie elektrische Leistung mit einer Gleichspannung/Gleichstrom bereitstellt, muss zur Einspeisung in das Netz dann noch eine Umrichtung in eine Wechselspannung/Wechselstrom erfolgen und je nachdem, welche Spannungsverhältnisse vorliegen, mittels eines Transformators auch eine Anhebung auf das gewünschte Spannungsniveau.

Ziel der Erfindung ist es, eine bestehende Infrastruktur für einen neuen Einsatzzweck zu nutzen.

Ein Lagerbehälter für Gülle oder als Einsatz als Fermenter erfüllt zunächst den Zweck, dort Gülle, Gärreste oder zu fermentierenden Materialien oder dergleichen zu lagern.

Die Umnutzung als Volumen bzw. Tank für die Durchflussbatterie setzt dann die Leerung des Lagerbehälters von ihrem landwirtschaftlichen oder Biogasgut voraus, also die Entleerung von Gülle, Fermenten, Mist, Gärresten usw.

Hiernach erfolgt dann die Säuberung des Behälters mittels Hochdruckreiniger, Sand- Glasperlenstahltechnik oder durch Abschleifen der Innenwände oder in Kombination der Verfahren. Nach Inspektion des Behälters können die Wände zusätzlich versiegelt / abgedichtet, z. B. mit einer elektrisch isolierenden Folie, beschichtet werden. Nicht mehr benötigte Anschlüsse, Ablässe, Rohrdurchführungen, Inspektionsluken, Rührwerksöffnungen oder der Gleichen werden verschlossen (z.B. durch Stopfen, Abdeckplatten) Anschließend sind verschiedene Verfahren zur zusätzlichen Abdichtung der Behälterinnenwände (wenn nach Inspektion / Beurteilung notwendig) anwendbar bzw. zu kombinieren. Dichtanstrich, Epoxidharzbeschichtung, Einbringung einer zusätzlichen Folie / Plane, das Auskleiden mit Edelstahlplatten, entsprechend beschichteten Stahlplatten oder Kunststoffplatten. Hierbei bieten grade bekannte Verfahren die in chemischen Anlagen wie z. B. Galvanikbetrieben zu Einsatzkommen mehrere Möglichkeiten.

Zur Aufbereitung des Behälters zur sicheren Nutzung kann beispielhaft der Aufbau einer mehrschichtigen Leckschutzauskleidung vorgesehen werden. Der Schichtaufbau erfolgt dabei in drei Stufen:

### Erste Schicht - Kunststoffbarriere

Zunächst wird eine Kunststoffauskleidung eingebracht und an allen Kanten und Stößen dicht verschweißt.

### Zweite Schicht - Abstandshalter

Anschließend wird ein Abstandshalter in Form eines Netzes, Bauschaums, Gitters oder Vlieses eingebracht. Diese Zwischenschicht verhindert, dass beide Kunststoffbarrieren direkt aufeinanderliegen.

### Dritte Schicht - zweite Kunststoffbarriere

Abschließend wird eine weitere dicht verschweißte Kunststoffauskleidung eingebracht.

Auf diese Weise entsteht der Aufbau: Kunststoffbarriere - Abstandsschicht - Kunststoffbarriere.

Der durch den Abstandshalter entstehende Hohlraum ermöglicht eine zuverlässige Leckageüberwachung. In diesem Zwischenraum wird ein Vakuum erzeugt. Solange beide Kunststoffbarrieren dicht sind, bleibt das Vakuum stabil und zeigt damit die Dichtigkeit des Behälters an.

Schließlich erfolgt die Befüllung des Behälters mit der Elektrolytflüssigkeit der Durchflussbatterie. Wenn dann das Volumen des Lagerbehälters, also die in ihm gelagerte Elektrolytflüssigkeit, an einen Kreislauf angeschlossen ist, sodass die in dem Lagerbehälter gespeicherte Flüssigkeit zu der Membran (ebenfalls einsetzbar sind neue Verfahren die ohne Membran auskommen. Hierbei werden beispielsweise zwei nicht mischbare Flüssigkeiten eingesetzt) des Energiewandlers gepumpt werden kann, erfolgt dann die Umnutzung zur Durchflussbatterie.

Lagerbehälter für Gülle wie auch Fermenter von Biogasanlagen weisen regelmäßig auch Rühranlagen auf. Diese werden vor der Umnutzung der Lagerbehälter als Tank/Volumen für die Durchflussbatterie abgebaut und entfernt.

Ein Lagerbehälter ist auch ein solcher, der bis dato auch als Tankbehälter eingesetzt wurde, beispielsweise als Heizöl- oder Diesel- oder Benzin- etc. -tank, z. B. in einem landwirtschaftlichen Betrieb oder in einer größeren Tankanlage, z. B. Tankstelle. Wenn solche Tanks ihre originäre Funktion verlieren, beispielsweise, weil immer mehr Fahrzeuge auf Elektromobilität oder Wasserstoff umgestellt werden und weil der Ursprungszweck der Tanks nicht mehr benötigt wird, können dann diese Tanks bzw. Lagerbehälter für flüssige Brennstoffe einer Tankanlage wie beschrieben genutzt werden für die Bereitstellung einer Durchflussbatterie wie vorstehend beschrieben.

Ein Behälter gilt auch dann als Lagerbehälter, wenn er bislang zur Speicherung von Wasser genutzt wurde, beispielsweise für Trinkwasser, Löschwasser, Pflanzenschutzwasser oder als Schwimmbecken, öffentliche Schwimmbecken, Kläranlagebecken oder dergleichen.

Die erfindungsgemäß beschriebene Durchflussbatterie lässt sich auf einfache Weise auch ohne Anschluss an ein elektrisches Netz in eine erneuerbare Erzeugungsanlage einbinden.

Sie erzeugt beispielsweise eine PV-Anlage elektrische Leistung Gleichspannung und durch eine direkte Leitung zwischen der PV-Anlage und der Durchflussbatterie, kann die Batterie geladen werden, und falls die elektrische Batterie entladen werden soll, kann über den gleichen Leitungsstrang elektrische Energie von der Batterie zurück zur PV-Anlage und von dort über die vorhandenen Umrichtertransformatoren in das Netz eingespeist werden.

Auf diese Weise lässt sich der Zubau von notwendigen Netzübergabepunkten verringern. Das spart Kosten und reduziert die zukünftige Komplexität im Stromnetz erheblich.

Gleiches lässt sich auch ohne Weiteres mit einer Windenergieanlage bewerkstelligen, insbesondere, weil auch Windenergieanlagen über einen sogenannten Gleichspannungskreis verfügen, und elektrische Energie aus diesem Gleichspannungskreis kann zum Laden der Batterie bei einer direkten Verbindung (ohne Netzanschluss) der/zur Durchflussbatterie geleitet werden und bei Entladung der Batterie kann elektrische Leistung von der Durchflussbatterie zurück in den Gleichspannungskreis der Windenergieanlage eingespeist und dann durch vorhandene Umrichter in Wechselspannung .geleitet und dann ins Netz eingespeist werden. Der Vorteil dieser Lösung besteht darin, dass der Austausch zwischen elektrischer Leistung zwischen der erneuerbaren Erzeugungsanlage einerseits und der Durchflussbatterie andererseits ohne ein vorhandenes Versorgungsnetz auskommt. Durch den direkten elektrischen Anschluss der Durchflussbatterie kann die erneuerbare Erzeugungsanlage wird quasi der Erzeugungsanlage durch die direkte elektrische Verbindung eine etwas größere Entfernung, z. B. 500 - 1000 m zur Batterie bereitgestellt und Aufwendungen, die üblicherweise für die Netzeinspeisung notwendig sind, sind dann zum Laden der Batterie nicht notwendig, zumal bei einer Netzeinspeisung in ein Wechselspannungsnetz diese Leistung, die dann in die Batterie eingespeist werden soll, zunächst einmal wieder gleichgerichtet werden muss und dann später bei der Einspeisung nochmals in Wechselspannung umgerichtet werden muss. Durch die direkte Anbindung der Durchflussbatterie an erneuerbare Energieerzeuger werden also auch mehrere Umrichtungsvorgänge eingespart, was insgesamt den Wirkungsgrad erhöht, und es ist dabei auch möglich, die vorhandene Infrastruktur der erneuerbaren Energiequelle (Wind, PV) zu nutzen.

Es ist auch möglich, dass im Lagerbehälter eine einzelne Batterie (Akkumulator) Zelle bildet, bei welcher dann z.B. die Anode im Boden und die Kathode sich am Deckel des Behälters befindet (oder umgekehrt).

Auch ist es möglich, dass ein Lagerbehälter in mehrere Zellen aufgeteilt wird, wobei dann der Lagerbehälter in mehrere gestapelte Zylinderabschnitte (Tortenschnitte) aufgeteilt wird und jeder einzelne Zylinderabschnitt ein eigener Innenteil der Batterie bildet.

Aufgrund der großen Menge an benötigten Elektrolyten ist es möglich bzw. sinnvoll, die finale Herstellung des Elektrolytstoffs direkt vor Ort durchzuführen. Da das Elektrolyt überwiegend aus Wasser besteht, kann dieses in der erforderlichen Qualität unmittelbar am Standort erzeugt werden. So lässt sich beispielsweise Trinkwasser vor Ort entmineralisieren und als Grundstoff nutzen.

Die benötigten Elektrolyt-/Zusatzstoffe, z. B. Vanadium, chemische Salze, können anschließend über Flüssig- und Feststoffdosierer dosiert und in das aufbereitete Wasser eingemischt werden. Durch dieses Vorgehen lassen sich sowohl Kosten als auch Transporte von Gefahrstoffen reduzieren.

## Patentansprüche

1. Verfahren zum Bereitstellen einer Durchflussbatterie, wobei die Durchflussbatterie ein erstes Volumen (V1) und ein zweites Volumen (V2) für die Aufnahme von unterschiedlichen Elektrolytflüssigkeiten aufweist und das erste Volumen oder zweite Volumen durch den ersten und/oder zweiten Lagerbehälter bereitgestellt wird, wobei die Nutzung des Volumens der Durchflussbatterie nach Nutzung des Lagerbehälters in einem landwirtschaftlichen Betrieb oder einer Biogasanlage und dergleichen erfolgt.

2. Verwendung eines bestehenden und landwirtschaftlich nutzbaren und/oder genutzten Lagerbehälters, z. B. für Gülle / Gärreste, Klärschlamm, Flüssigdünger, Auffangbehälter für Oberflächenwasser, Wasser oder Mist oder Nass- oder Trockenfermentation einer Biogasanlage, zur Bereitstellung als Tank für die Aufnahme einer Elektrolyt-Flüssigkeit einer Durchflussbatterie.

3. Durchflussbatterie mit einem ersten Tank und einem zweiten Tank, wobei in dem ersten Tank eine erste Flüssigkeit mit einem Elektrolyt A und in dem zweiten Tank eine zweite Flüssigkeit mit einem Elektrolyt B untergebracht ist und die Flüssigkeiten einer Membraneinheit zugeführt werden und die erste Flüssigkeit an der ersten Seite der Membran und die zweite Flüssigkeit auf der anderen Seite der Membran vorbeigeführt werden, sodass ein Ionenaustausch zwischen den Flüssigkeiten durch die Membran erfolgt, wobei wenigstens einer der beiden Tanks, vorzugsweise beide Tanks, Lagerbehälter (1, 2) sind, die zuvor für die Lagerung von Gülle Gärreste, Klärschlamm, Flüssigdünger, Auffangbehälter für Oberflächenwasser, Wasser oder Mist oder einer Nass- oder Trockenfermentation errichtet und genutzt worden sind.

4. Durchflussbatterie nach Anspruch 3, **dadurch gekennzeichnet, dass** der Lagerbehälter ein erstes Volumen (V1) aufweist, welches durch eine Trennwand in dem Lagersilo in ein erstes Teilvolumen (VA) und ein zweites Teilvolumen (VB) aufgeteilt wird und das erste Teilvolumen (VA) den Volumeninhalt des ersten Tanks (1) und das zweite Teilvolumen (VB) das Volumen des zweiten Tanks (2) bildet.

5. Durchflussbatterie nach einem der vorhergehenden Ansprüche, **dadurch gekennzeichnet, dass** die Innenseite des Lagerbehälters mit einer flüssigkeitsdichten Schicht, z. B. eine Folie oder dergleichen bedeckt ist.

6. Verfahren zur Umnutzung eines Lagerbehälters in einem landwirtschaftlichen Betrieb oder einer Biogasanlage mit folgenden Schritten:
- Der oder die Lagerbehälter in dem landwirtschaftlichen Betrieb oder der Biogasanlage oder dergleichen werden gereinigt.
- Anbauten an dem Lagerbehälter, z. B. ein Rührwerkzeug, werden abgebaut.
- Nicht mehr benötigte Anschlüsse, Ablässe, Rohrdurchführungen, Inspektionsluken, Rührwerksöffnungen oder der Gleichen werden nach Stand der Technik verschlossen (z.B. durch Stopfen, Abdeckplatten)
- Optional wird der Lagerbehälter innenseitig mit einer flüssigkeitsdichten Schicht versehen, z. B. mit einer flüssigkeitsdichten und/oder elektrisch isolierenden Folie ausgekleidet.
- Der Lagerbehälter wird mit Elektrolytflüssigkeit gefüllt.
- Der Lagerbehälter wird mittels Leitungen, Pumpen an einem Energiewandler, z. B. einer galvanischen Zelle, verbunden, wobei die Pumpen Flüssigkeit aus dem Lagerbehälter durch Leitungen zum Energiewandler transportiert und die Flüssigkeit dann zum Lagerbehälter zurückfließt.
- Der Lagerbehälter wird mit einer Abdeckung versehen.
(Die vorgenannten Schritte können miteinander vertauscht werden.)
